# EUROPÄISCHE PATENTSCHRIFT

(11) **EP 2 549 143 B1**
(45) Veröffentlichungstag und Bekanntmachung des Hinweises auf die Patenterteilung: **23.01.2019**
(21) Anmeldenummer: 11174889.3
(22) Anmeldetag: 21.07.2011
(51) Int. Cl.: F16G 5/08, F16G 5/20, D02G 3/32, D02G 3/44, D03D 15/08, D04B 1/18, D04B 21/18

(54) **Kraftübertragungsriemen, insbesondere Keilrippenriemen**
Power transmission belt, in particular V-ribbed belt
Courroie de transmission de force, notamment courroie trapézoïdale à nervures

(43) Veröffentlichungstag der Anmeldung: 23.01.2013
(73) Patentinhaber: ContiTech Antriebssysteme GmbH, 30165 Hannover (DE)
(72) Erfinder: Baltes, Thomas, 30177 Hannover (DE); Teves, Reinhard, 30926 Seelze (DE); Mahnken, Claus-Lüder, 27367 Ahausen (DE); Kanzow, Henning, 30419 Hannover (DE); Greiner, Christian, 30451 Hannover (DE)
(74) Vertreter: Finger, Karsten

(56) Entgegenhaltungen:
- EP-A1- 1 455 113
- EP-A1- 1 731 638
- WO-A1-2009/030529
- WO-A1-2009/034748
- WO-A1-2011/029710
- DE-A1- 10 029 470
- DE-T2- 60 025 843
- JP-A- 2004 011 052

## Beschreibung

Die Erfindung betrifft einen Kraftübertragungsriemen mit einem elastischen Grundkörper, umfassend eine Decklage als Riemenrücken und einen Unterbau mit einer Kraftübertragungszone, wobei wenigstens die Decklage mit wenigstens einem textilem Werkstoff bedeckt ist bzw. sind, welcher aus Kette und Schuß aufgebaut ist.

Kraftübertragungsriemen, die auch als Antriebsriemen bezeichnet werden und im Funktionszustand endlos geschlossen sind, können als Flachriemen, Keilriemen, Keilrippenriemen und Zahnriemen ausgebildet sein.

Die Bedeckung der Kraftübertragungszone und / oder der Decklage dient in erster Linie dazu, die Lebensdauer dieser beiden mechanisch stark beanspruchten Bereiche des Riemens zu verlängern.
Gleichzeitig muss die Bedeckung mit dem textilen Werkstoff eine gute Biegewechselbeständigkeit des Riemens gewährleisten können, dies ist vor allem für die Bedeckung der Deckseite relevant.

Bedeckungen für die Kraftübertragungsseite sind beispielsweise aus WO2009/030529A1, EP 1 388 598 A1, DE 44 13 540 A1 und aus WO2009/034748A1 bekannt. Neben dem Verschleißschutz ist auf der Kraftübertragungsseite vor allem die Geräuschdämmung problematisch, welche unter anderem durch Penetration von Gummimaterial in das Gewebe entsteht. Zur Vermeidung dieser Penetration wird in WO2009/034748A1 ein Gewebe verwendet, welches durch zwei elastische Garne eine bidirektionale Elastizität besitzt. In WO2009/030529A1 A1 ist das Gewebe für die Kraftübertragungsseite ebenso bidirektional elastisch. EP 1 388 598 A1 beschreibt zur Geräuschminderung ein Kompositgarn, während in DE 44 13 540 A1 das Schußgarn p-Aramidfasern enthält. Die beiden als Letztes genannten sind insbesondere für die Anwendung im Zahnriemen gedacht.

Derartige textile Bedeckungen in Form von Rückengeweben, welche aus Kett- und Schussfäden bestehen, sind beispielsweise aus DE 100 29 470 C2 und EP 1 643 157 A1 bekannt.
In EP 1 455 113 B1 wird ein spezielles Rückengewebe beschrieben, das aus einem elastischen Kerngarn mit darauf gewundenen Unwindegarnen besteht.
Hierbei wird allerdings beim Einsatz von nicht elastischen Naturfaser-, Kunstfaser- oder Mischgeweben als Rückengewebe zur Unterstützung der Biegewechselbeständigkeit üblicherweise ein Aufbau gewählt, bei dem das Gewebe um 45° zur Riemenrichtung gedreht aufgelegt wird, um in Riemenrichtung eine Konstruktionsdehnung zu erreichen. Dadurch ergeben sich schräge Überlappungsstellen bzw. schräge Nähte, die sich negativ auf die Riemenhaltbarkeit auswirken.
Zur Verbesserung der Konstruktionsdehnung in Längsrichtung existieren auch so genannte Weitwinkelgewebe, bei denen der Winkel zwischen Kett- und Schussfaden von 90° abweicht.

Aufgabe der vorliegenden Erfindung ist es nun, einen Kraftübertragungsriemen bereitzustellen, der sich durch eine verbesserte Lebensdauer, d.h. eine verbesserte Riemenhaltbarkeit, und durch eine ausreichende bis verbesserte Biegewechselbeständigkeit auszeichnet. Gleichzeitig sollen schräge Überlappungsstellen bzw. schräge Nähte vermieden oder zumindest deutlich reduziert werden.

Gelöst wird diese Aufgabe dadurch, dass wenigstens die Decklage des Kraftübertragungsriemens mit wenigstens einem textilem Werkstoff bedeckt ist, welcher aus Kette und Schuß besteht, wobei der Schuß und / oder die Kette wenigstens einen elastischen Faden als Kerngarn enthält, welcher mit Stapelfasern umsponnen ist und wobei der elastische Faden als Kerngarn parallel zur Laufrichtung ist.

Überraschenderweise wurde gefunden, dass sich ein derartig ausgestalteter Riemen durch eine besonders Dauerhaltbarkeit auszeichnet. Gleichzeitig wird durch das elastische Garn in Riemenrichtung (d.h. parallel zur Laufrichtung) eine gute Biegewechselbeständigkeit des Riemens erzielt.
Die textile Bedeckung muss daher nicht mehr in einem Winkel abweichend von 90° geschnitten, vernäht und zur Laufrichtung aufgebracht werden, wodurch schräge Überlappungsstellen bzw. schräge Nähte nicht mehr vorhanden sind. Dies erhöht auch die Akzeptanz der Riemen bei den Kunden, die diese schrägen Stellen auf der Riemenoberfläche als optisch störend empfunden haben.
Es ist aber weiterhin durchaus möglich, bei Bedarf oder Notwendigkeit (z.Bsp.aufgrund technischer Gegebenheiten vor Ort), die Naht mit einem Überlappungsbereich zu versehen oder einen offenen Stoß zu verwenden. Ebenso sind weiterhin Überwendlichnähte bzw. Überwendlingsnähte möglich.

Der Kraftübertragungsriemen kann lediglich auf der Seite der Decklage mit dem textilen Werkstoff bedeckt sein, es ist aber auch möglich, dass sowohl die Decklage als auch die Kraftübertragungsseite mit dem textilen Werkstoff bedeckt sind.

Decklage und Unterbau bilden dabei als Gesamteinheit den elastischen Riemengrundkörper des Kraftübertragungsriemens, der aus einem elastomeren Werkstoff besteht, insbesondere in Form einer vulkanisierten Kautschukmischung. Als Kautschukkomponente wird zumeist ein Ethylen-Propylen-Mischpolymerisat (EPM), ein Ethylen-Propylen-Dien-Misch-Polymerisat (EPDM), ein (teil)hydrierter Nitrilkautschuk (HNBR), Chloroprenkautschuk (CR) oder Fluor-Kautschuk (FPM) eingesetzt. Etwaige Zugstränge bestehen aus Stahl, Polyamid, Aramid, Polyester, Glasfasern, Kohlefasern, Polyetherketon (PEEK), Polytehylen-2,6-naphthalat (PEN), Basalt oder Polybenzoxazole (PBO).

Zur Verbesserung der Haftung sowie zur Einstellung des Reibbeiwertes der Riemenrückseite kann die textile Bedeckung vor dem Auflegen gummiert werden. Die Gummierung kann durch einen oder mehrer Tauch-, Streich- oder Kalanderschritte oder eine Kombination daraus erfolgen. Die Gummierung kann beispielsweise aus EPDM und / oder CR und / oder HNBR und / oder NBR und / oder SBR oder anderen Kautschuken bzw. deren Kombinationen bestehen.

Das textile Bedeckung kann vor dem Aufbau zum Wickel bzw. Riemen mit einer Gummiplatte dubliert werden, um so die Kraftübertragungszone und / oder die Decklage mit Rückengewebe vorzufertigen und in einem Schritt aufzulegen.

Bei dem textilen Werkstoff handelt es sich vorteilhafterweise um ein Gewebe, Gewirke oder Gestrick, bevorzugt um ein Gewebe. Relevant ist, dass der textile Werkstoff aus Kette und Schuß besteht, wobei der Schuß oder die Kette wenigstens einen elastischen Faden als Kerngarn enthält, welcher mit Stapelfasern umsponnen ist und wobei der elastische Faden als Kerngarn parallel zur Laufrichtung ist. Kette und / oder Schuß können dabei eine Kern-Mantel-Struktur aufweisen.

Gemäß Römpp, Online-Chemielexikon, Version 3.14 ist der Begriff Stapelfaser eine alte Bezeichnung für Spinnfasern. Bei Spinnfasern handelt es sich um "eine auf chemischtechnischem Wege nach unterschiedlichen Verfahren erzeugte Faser begrenzter Länge (im Gegensatz zu Filamenten), die meist als Flocke anfällt und nach einem mechanischen Spinnverfahren zu Spinnfasergarn oder Spinnband versponnen oder zu Filzen, Vliesstoffen, Watte, Füll- und Isoliermaterial oder ähnlichen Erzeugnissen verarbeitet wird." Dies bedeutet, dass alle Stapelfasern Einzelfasern sind, deren Länge begrenzt sind. Bei Filamenten handelt es sich um Endlosfasern. Alle Naturfasern sind automatisch Stapelfasern, da sie nur bis zu einer bestimmten Länge vorkommen. Alle Chemiefasern können zu Stapelfasern geschnitten werden.
Die Stapelfasern haben in der Regel eine Länge zwischen 10 und 70 mm.

Der Vorteil von Stapelfasern, insbesondere von Stapelfasern aus Naturfasern, ist, dass sie in der Regel kostengünstiger sind, als Filamentgarne.

Die Stapelfasern können aus einer Sorte Fasern oder aus einer Kombination von zwei oder mehr verschiedenen Fasern bestehen.

In einer besonders bevorzugten Ausführungsform handelt es sich um Naturfasern gemäß DIN 60001-1: 2001-05, die aus Pflanzenteilen gewonnen sind oder das Haarkleid von Tieren bilden oder von den Kokons der Seidenspinner gewonnen werden oder mineralischen, natürlichen Ursprungs sind.

Gemäß Römpp, Online-Chemielexikon, Version 3.14 gilt: "Pflanzenfasern können Samenfasern (Beispiel: Baumwolle), Fruchtwandfasern (Beispiel: Kapok), Bastfasern (Flachs, Hanf, Jute usw.) oder Hartfasern (Sisal, Kokos und andere) sein. Bei tierischen Fasern wird zwischen Wolle, feinen und groben Tierhaaren sowie Seide unterschieden. Eine (technische) Naturfaser auf Mineralbasis ist Asbest (siehe auch Mineralfasern). Länge und Querschnitt der Naturfasern ergeben sich aus dem natürlichen Wachstum; durch die Verarbeitung erhält man kürzere Faserstücke." Als besonders geeignet hat sich die Verwendung von Stapelfasern aus Baumwolle gezeigt, welche gleichzeitig besonders kostengünstig sind.

Es können aber auch Chemiefasern, zum Beispiel aus natürlichen Polymeren, wie Cuprofasern, Cellulosefasern, Modalfasern, Acetatfasern, oder synthetischen Polymeren wie beispielsweise Polyacrylfasern, Vinylacetatfasern, Vinylpyrrolidonfasern, Aramidfasern, Polychloridfasern, Elastanfasern , Elastodienfasern, Fluorofasern, Modacrylfasern, Polyamidfasern, Polyesterfasern, Polyethylenfasern, Polyimidfasern, Polypropylenfasern oder Vinylalfasern, oder anorganischen Stoffen, wie Glasfasern, Kohlenstofffasern oder Metallfasern, verwendet werden.

Beispiele für mögliche Kombinationen aus zwei oder mehr Fasern sind:
- Baumwolle / Polyester;
- Baumwolle / Polyamid;
- Polyester / Polyamid;
- Polyamid / Aramid;
- Polyamid / Polybenzoxazole;
- Polyamid / Polyphenylensulfide;
- Polyamid / Polyetheretherketon; etc.

Durch die Kombination von ein oder mehr Fasern lassen sich gezielte Garneigenschaften herstellen.

Es können dadurch alle an sich nicht elastischen Stapelfasern in Riemenrichtung als textile Bedeckung eingesetzt werden, die bisher nur bei gewinkeltem Auflegen für die dynamischen Belastungen eines Kraftübertragungsriemens geeignet waren.

Das Kerngarn besteht vorteilhafterweise aus Polyurethan oder einem anderen geeigneten elastischen Material, wobei hier beispielsweise Gummifäden, zum Beispiel aus Dienkautschuk, wie Naturkautschuk oder Butadienkautschuk, EPDM oder vergleichbaren, bevorzugt jeweils vernetzt, oder unverstrecktes Polyamid, bevorzugt PA6.6, oder elastische Polyester (z.B. PET, PTT, PBT) bzw. sog. Multelastester (Polyetherester PEE), oder auch elastische Copolymere geeignet sind.

Das Kerngarn hat vorzugsweise eine Bruchdehnung zwischen 100 und 700%, besonders bevorzugt zwischen 150 und 500%.

Die verwendete textile Bedeckung, d.h. insbesondere das Gewebe, hat eine Bruchdehnung zwischen 10 und 50 % und eine Rückstellung nach 15% Dehnung zwischen 0,1 und 5% bleibende Dehnung. Die Bruchdehnung der textilen Bedeckung wurde in Anlehnung an DIN EN ISO 13934 bestimmt.

Der Anteil des elastischen Materials im Gewebe beträgt vorteilhafterweise 1 bis 70 Gew. -%, bevorzugt 1 bis 50 Gew. -%, besonders bevorzugt 5 bis 50 Gew. -% und ganz besonders bevorzugt 10 bis 50 Gew. -%.

Insbesondere Aramid und Polyamid 6.6 haben sich für die vorliegende Erfindung als Stapelfaser, insbesondere bei der Anwendung im Ölbereich und Hochtemperaturbereich, als besonders geeignet gezeigt.

Aramid ist zwar etwas beständiger gegenüber Temperatur- und Chemikalieneinflüsse, dafür aber dynamisch geringfügig etwas schlechter als Polyamid 6.6.

Dies kann dadurch ausgeglichen werden, dass der erfindungsgemäße Kraftübertragungsriemen in einer besonderen Ausführungsform mit einer Beschichtung versehen ist. Insbesondere die Kraftübertragungszone und / oder die Decklage sind hierbei mit einer Beschichtung versehen. Es ist aber auch möglich, dass der Kraftübertragungsriemen vollständig mit der Beschichtung ummantelt ist, d.h. dass neben der Kraftübertragungszone und der Decklage ebenso die beiden Kanten beschichtet sind. Zur Erlangung einer besonders guten Temperatur- und Chemikalienbeständigkeit kann die textile Auflage gegebenenfalls noch mit einer Beschichtung versehen werden.

Wird der Kraftübertragungsriemen unter einer Ölatmosphäre betrieben, so ist zusätzlich eine gute Ölbeständigkeit gefordert, wobei die Beschichtung und die darunter liegende(n) Gummimischung(en) vor dem Eindringen von Öl geschützt werden.

Besonders gute Eigenschaften ergeben sich, wenn die Beschichtung auf der Basis wenigstens eines Acrylats ist, wie es in der WO 2011/029710A1 beschrieben ist.

Hierbei kann es sich um Substanzen aus der Gruppe der Methacrylate und / oder der Acrylate handeln.

Werden Acrylate verwendet, so haben diese bevorzugt Isocyanatgruppen, bevorzugt mit. difunktionellen Gruppen am Kettenende.

In einer besonders bevorzugten Ausführungsform handelt es sich um Dipropylenglycoldiacrylat (DPGDA) und / oder Tripropylenglycoldiacrylat (TPGDA) und / oder Hexandioldiacrylat (HDDA), bevorzugt Hexan-1,6-dioldiacrylat (1,6-HDDA) und / oder Trimethylpropantriacrylat (TMPTA) und / oder Diurathendimethacrylat (HEMA-MDI).

Die genannten Acrylate können alleine oder in Kombination mit wenigstens einem weiteren verwendet werden.

Des Weiteren kann die Beschichtung noch wenigstens einen pulverförmigen Gleitkörper enthalten, welcher ausgewählt ist aus der Gruppe, bestehend aus Polytetrafluorethylen (PTFE) und / oder modifiziertem Polytetrafluorethylen (TFM) und / oder Fluorethylenpolymer (FEP) und / oder Perfluoralkylvinylether-Tetraethylen-Copolymer (PFA) und / oder Ethylen-Tetrafluorethylen-Copolymer (ETFE) und / oder Polyvinylfluorid (PVF) und / oder Polyvinylidenflourid (PVDF) und / oder ultrahochmolekularem Polyethylen (UHMWPE), wobei Polytetrafluorethylen (PTFE) und / oder modifiziertes Polytetrafluorethylen (TFM) besonders bevorzugt sind.

Es ist auch denkbar andere, der fachkundigen Person bekannte pulverförmige Gleitkörper, wie beispielsweise Silikate, Sulfide (bspw. Molybdänsulfid), Nitride (bspw. Bornitrid) Graphit, etc. zu verwenden. Die pulverförmigen Gleitkörper dienen zur weiteren Verringerung des Reibbeiwertes.

Die Beschichtung kann dabei einschichtig oder mehrschichtig sein.

Weiterhin ist es erfindungswesentlich, dass das Kerngarn parallel zur Laufrichtung angeordnet ist, da sonst keine gute Biegewechselbeständigkeit gewährleistet ist. Dies bedeutet, dass prinzipiell Kett- und Schussfäden vertauscht werden können. Sind die Kettfäden elastisch, so würde der Querschneideprozess vor dem Auflegen der textilen Bedeckung wegfallen. Allerdings muss dann das Auftragen einer etwaigen Beschichtung möglichst spannungsarm erfolgen.

Auch der Einsatz der elastischen Fäden sowohl in Kett- als auch in Schussrichtung ist zur Erzeugung eines bidirektionalen Stretchgewebes möglich.

Als Webmuster kommen neben der Leinwandbindung auch die Panamabindung sowie Körperbindungen und gebrochene Körperbindungen (z.Bsp. Kreuzkörperableitungen) in Frage.

Der Kraftübertragungsriemen findet Verwendung als Flachriemen, Keilriemen, Zahnriemen und Keilrippenriemen, wobei letzterer besonders bevorzugt ist.

Die Erfindung wird nun anhand von drei Ausführungsbeispiels unter Bezugnahme auf zwei schematische Darstellungen beschrieben.

Es zeigen:
- Fig. 1: Querschnitt durch einen Keilrippenriemen mit einer Gewebeauflage für die Decklage.
- Fig. 2: Aufbau des Schuß- und / oder Kettgarns
- Fig. 3: Kern- Mantelstruktur des Kerngarns

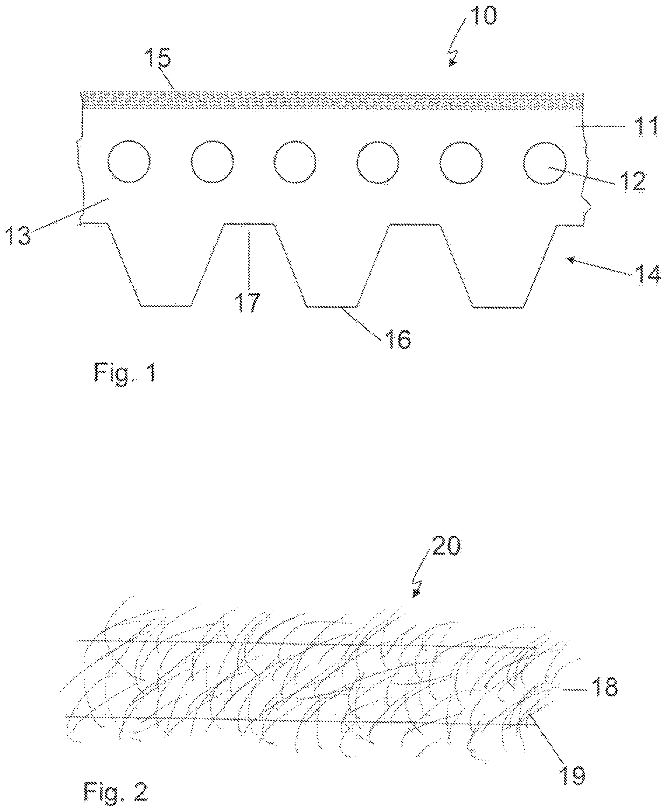

Figur 1 zeigt einen Antriebsriemen 10 in Form eines Keilrippenriemens mit einer Decklage 11 als Riemenrücken, einer Festigkeitsträgerlage 12 in Form von in Längsrichtung verlaufenden parallel angeordneten Zugträgern sowie mit einem Unterbau 13. Der Unterbau weist eine Keilrippenstruktur auf, gebildet aus Rippen 16 und Rillen 17. Der Unterbau umfasst dabei die Kraftübertragungszone 14.

Die Decklage 11 ist mit einem textilen Werkstoff, z.B. einem Gewebe 15, aus erfindungsgemäßer Kette und / oder Schuß versehen.

Figur 2 zeigt den erfindungsgemäßen Aufbau 20 des Schußgarns und / oder des Kettgarns. Das Kerngarn 18 besteht aus einem elastischen Material, vorzugsweise Polyurethan, welches von Stapelfasern 19, vorzugsweise aus Baumwolle, umsponnen ist.

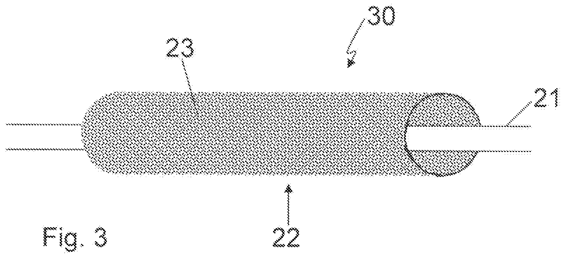

Figur 3 zeigt eine vorteilhafte Ausgestaltung 30 des Schußgarns und / oder des Kettgarns, wobei das Kerngarn 21 von einem Mantel 22 umhüllt ist, welcher aus Stapelfasern 23, vorzugsweise Baumwolle, aufgebaut ist.

### Bezugszeichenliste

10 Keilrippenriemen
20 Schuß oder Kette
30 Kern-Mantel-Struktur von Kette und / oder Schuß
11 Decklage als Riemenrücken
12 Festigkeitsträger in Form von Zugsträngen
13 Unterbau
14 Kraftübertragungszone
15 Textiler Werkstoff auf Decklage
16 Rippen
17 Rillen
18 Kerngarn
19 Stapelfasern
21 Kerngarn
22 Mantel
23 Stapelfasern

## Patentansprüche

1. Kraftübertragungsriemen (10) mit einem elastischen Grundkörper, umfassend eine Decklage (11) als Riemenrücken und einen Unterbau (13) mit einer Kraftübertragungszone (14), wobei wenigstens die Decklage (11) mit wenigstens einem textilem Werkstoff bedeckt ist, welcher aus Kette und Schuß (20, 30) besteht, **dadurch gekennzeichnet, dass der** Schuß und / oder die Kette (20, 30) wenigstens einen elastischen Faden als Kerngarn (18, 21) enthält, welcher mit Stapelfasern (19, 23) umsponnen ist und dass der elastische Faden als Kerngarn (18, 21) parallel zur Laufrichtung ist.

2. Kraftübertragungsriemen nach Anspruch 1, **dadurch gekennzeichnet, dass** der textile Werkstoff ein Gewebe, Gewirke oder Gestrick ist.

3. Kraftübertragungsriemen nach Anspruch 1 oder 2, **dadurch gekennzeichnet, dass** die Stapelfasern (19, 23) Baumwollfasern sind.

4. Kraftübertragungsriemen nach einem der Ansprüche 1 bis 3, **dadurch gekennzeichnet, dass** der elastische Faden als Kerngarn (18, 21) aus Polyurethan besteht.

5. Kraftübertragungsriemen nach einem der Ansprüche 1 bis 4, **dadurch gekennzeichnet, dass** die Kraftübertragungszone (14) und / oder die Decklage (11) zusätzlich mit einer Beschichtung (15) versehen ist.

6. Kraftübertragungsriemen nach Anspruch 5 **dadurch gekennzeichnet, dass** die Beschichtung (15) auf der Basis wenigstens eines Acrylats ist.

7. Kraftübertragungsriemen nach einem der Ansprüche 1 bis 6, **dadurch gekennzeichnet, dass** er als Keilrippenriemen (10) ausgebildet ist.

## Claims

1. Force transmission belt (10) having an elastic foundational body, comprising a top ply (11) as belt backing and a substructure (13) having a force transmission zone (14), wherein at least the top ply (11) is covered with at least a textile material consisting of warp and weft (20, 30), **characterized in that** the weft and/or the warp (20, 30) contains at least an elastic thread as core yarn (18, 21) overspun with staple fibers (19, 23) and **in that** the elastic thread as core yarn (18, 21) is parallel to the running direction.

2. Force transmission belt according to Claim 1, **characterized in that** the textile material is a woven or knitted fabric.

3. Force transmission belt according to Claim 1 or 2, **characterized in that** the staple fibers (19, 23) are cotton fibers.

4. Force transmission belt according to any one of Claims 1 to 3, **characterized in that** the elastic thread as core yarn (18, 21) consists of polyurethane.

5. Force transmission belt according to any one of Claims 1 to 4, **characterized in that** a coating (15) is additionally provided to the force transmission zone (14) and/or the top ply (11).

6. Force transmission belt according to Claim 5, **characterized in that** the coating (15) is based on at least an acrylate.

7. Force transmission belt according to any one of Claims 1 to 6, **characterized in that** it is configured as a V-ribbed belt (10).

## Revendications

1. Courroie de transmission de force (10) comprenant un corps de base élastique, comprenant une couche de recouvrement (11) en tant que dos de courroie et une sous-structure (13) comprenant une zone de transmission de force (14), au moins la couche de recouvrement (11) étant recouverte avec au moins un matériau textile, qui est constitué par une chaîne et une trame (20, 30), **caractérisée en ce que** la la trame et/ou la chaîne (20, 30) contiennent au moins un fil élastique en tant que fil de noyau (18, 21), qui est gainé avec des fibres discontinues (19, 23), et **en ce que** le fil élastique en tant que fil de noyau (18, 21) est parallèle au sens machine.

2. Courroie de transmission de force selon la revendication 1, **caractérisée en ce que** le matériau textile est un tissu ou un tricot.

3. Courroie de transmission de force selon la revendication 1 ou 2, **caractérisée en ce que** les fibres discontinues (19, 23) sont des fibres de coton.

4. Courroie de transmission de force selon l'une quelconque des revendications 1 à 3, **caractérisée en ce que** le fil élastique en tant que fil de noyau (18, 21) est constitué par du polyuréthane.

5. Courroie de transmission de force selon l'une quelconque des revendications 1 à 4, **caractérisée en ce que** la zone de transmission de force (14) et/ou la couche de recouvrement (11) sont en outre munies d'un revêtement (15) .

6. Courroie de transmission de force selon la revendication 5, **caractérisée en ce que** le revêtement (15) est à base d'au moins un acrylate.

7. Courroie de transmission de force selon l'une quelconque des revendications 1 à 6, **caractérisée en ce qu'**elle est configurée sous la forme d'une courroie trapézoïdale à nervures (10).
